# EUROPÄISCHE PATENTANMELDUNG

(11) **EP 1 716 965 A1**
(43) Veröffentlichungstag der Anmeldung: **02.11.2006**
(21) Anmeldenummer: 06110163.0
(22) Anmeldetag: 20.02.2006
(51) Int. Cl.: B23K 35/14, B23K 35/30

(54) **Lot mit metallischem elementarem Zusatzpulver**

(30) Priorität: 28.04.2005 US 675819 P
(71) Anmelder: SIEMENS AKTIENGESELLSCHAFT, 80333 München (DE)
(72) Erfinder: Bezerra, Patricia, Orlando, 32826-2399 (US); Ott, Michael, 45478, Mülheim an der Ruhr (DE)

(57) **Zusammenfassung**

Lote enthalten zumindest einen Schmelzpunkterniedriger, die jedoch zu einer Verschlechterung der Eigenschaften des Bauteils führen, auf dem das Lot aufgebracht ist.

Das erfindungsgemäße Lot hat die gleiche oder ähnliche Zusammensetzung wie ein Lot nach dem Stand der Technik, jedoch sind hier die Elemente, die mit dem Schmelzpunkterniedriger eine Verbindung eingehen, zumindest teilweise als Pulver hinzugefügt. Als Ausführungsbeispiel wird ein bekannes Lot nach dem Stand der Technik für eine Eisen-, Nickel- oder Kobaltsuperlegierung mit zumindest den Legierungselementen Wolfram, Chrom, Nickel, Aluminium, Tantal, Basis Nickel oder Kobalt, sowie Bor als einzigem Schmelzpunkterniedriger verwendet. Das Bor bildet mit den Legierungselementen Wolfram und Chrom Boride. Daher werden zu dem bekannten Lot die Legierungselemente Wolfram und/oder Chrom zumindest teilweise als elementares metallisches Pulver hinzu gegeben, wobei das Pulver vorzugsweise als Nanopulver vorliegt.

## Beschreibung

Die Erfindung betrifft ein Lot gemäß Oberbegriff des Anspruchs 1.

Lote werden beispielsweise verwendet um Bauteile miteinander zu verbinden oder um Vertiefungen aufzufüllen. Letzteres ist beispielsweise dann der Fall, wenn ein Bauteil einen Riss oder eine Pore aufwies, die ausgearbeitet wurden und dann mit einem Lot wiederum aufgefüllt werden. Dies geschieht insbesondere bei Turbinenbauteilen für eine Dampf- oder Gasturbine. Erst eine solche wieder aufgearbeitete Turbinenschaufel kann erneut eingesetzt werden.

Das Lot enthält zumindest einen Schmelzpunkterniedriger, der jedoch nach dem Lötprozess unerwünscht ist, weil er unerwünschte Fremdphasen bildet, die zur Herabsetzung der Duktilität des Grundmaterials des Bauteils führen.

Es ist daher Aufgabe der Erfindung ein Lot aufzuzeigen, das das oben genannte Problem überwindet.

Die Aufgabe wird gelöst durch ein Lot gemäß Anspruch 1.

In den Unteransprüchen sind weitere vorteilhafte Maßnahmen aufgelistet, die in vorteilhafter Art und Weise miteinander verbunden werden können.

Es zeigen
- Figur 1, 2: ein Lot
- Figur 3: eine Liste mit Zusammensetzungen von Superlegierungen,
- Figur 4, 5: Bauteile, die mittels des erfindungsgemäßen Lots behandelt werden können und
- Figur 6: eine Gasturbine.

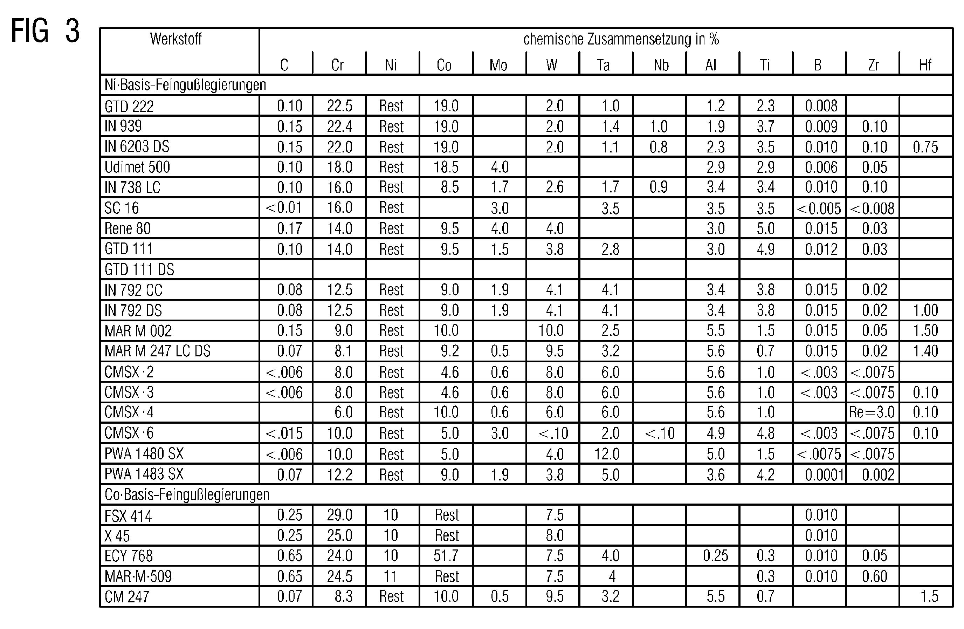

Die Bauteile, die mit dem erfindungsgemäßen Lot behandelt, insbesondere repariert werden, bestehen beispielsweise aus eisen-, nickel- und/oder kobaltbasierten Superlegierungen, wie sie in Figur 3 aufgelistet sind. Bauteile aus anderen Legierungen oder Metallen können aber auch mit dem erfindungsgemäßen Lot behandelt werden.

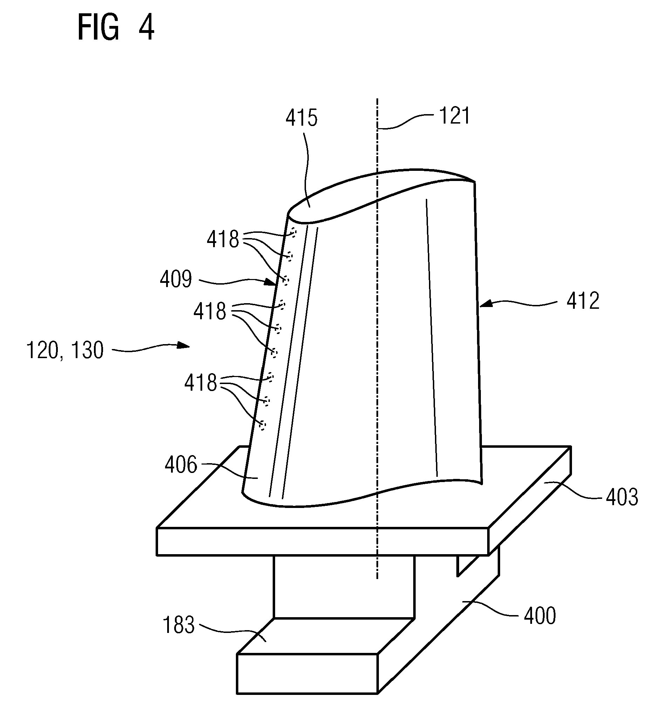

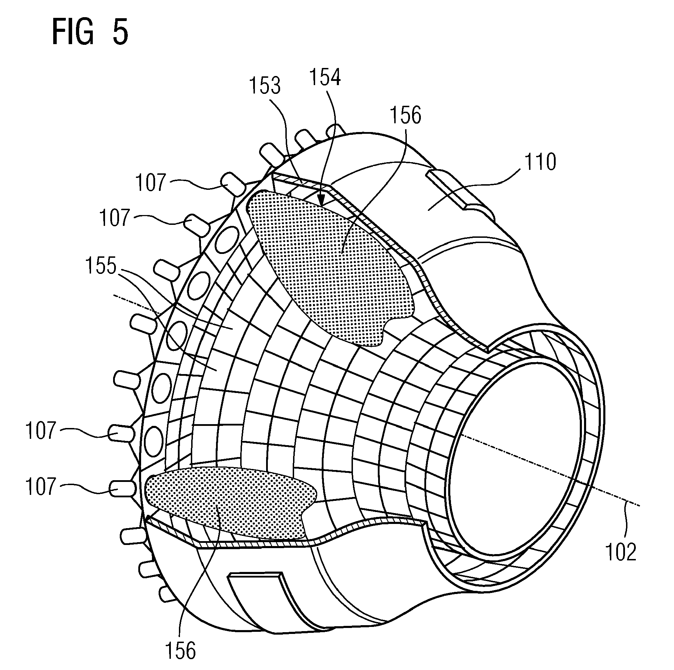

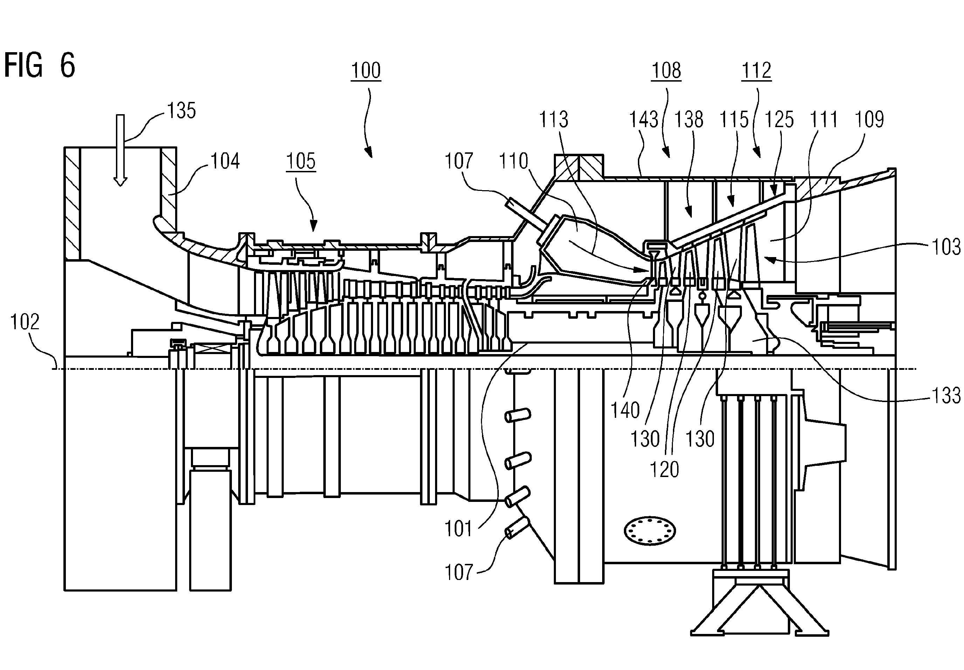

Solche Bauteile sind beispielsweise eine Turbinenschaufel 120, 130 (Fig. 4) oder Hitzeschildelemente 155 (Figur 5) oder Gehäuseteile 138 (Fig. 6) einer Gasturbine.

Auch bei der Neuherstellung solcher Bauteile kann es notwendig sein, dass eine Vertiefung, die beim Gussprozess entstand, aufgefüllt werden muss, auch wenn kein Riss vorhanden war. Das Löten dient somit nicht nur der Reparatur von Schäden nach einem betrieblichen Einsatz der Bauteile.

Das Lot stellt eine metallische Legierung aus mehreren Legierungselementen dar und enthält zumindest einen Schmelzpunkterniedriger. Auch zweielementige Lotlegierungen können erfindungsgemäß ausgestaltet werden.

Als Lot kann beispielsweise eine bekannte Superlegierung (z.B. Fig. 3) verwendet werden, wobei jedoch zumindest ein Schmelzpunkterniedriger wie z. B. Bor (B), Silizium (Si), Zirkon (Zr), Hafnium (Hf), Titan (Ti) verwendet wird, sodass das Lot bei einer gegenüber der Schmelztemperatur der Superlegierung niedrigeren Temperatur aufschmilzt und mit dem Material des Bauteils verbunden werden kann. Vorzugsweise werden ein oder zwei Schmelzpunkterniedriger verwendet: entweder B oder Si oder B und Si.

Zumindest ein Legierungselement des Lots, ein Fremdphasenbildner-Legierungselement, das mit dem zumindest einen Schmelzpunkterniedriger während des Lötprozesses eine Fremdphase bildet, liegt erfindungsgemäß zumindest teilweise als Zusatzpulver in Pulverform, insbesondere als Nanopulver vor.

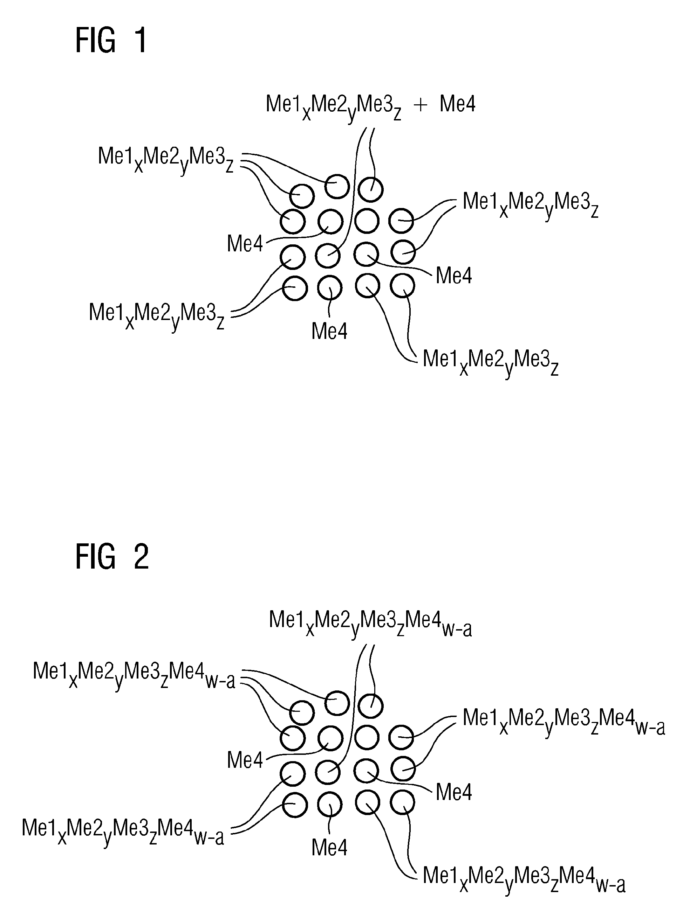

Figur 1, 2 zeigt ein solches Lot.
Das Lot insgesamt, also auch sein Basismaterial liegt vorzugsweise in Pulverform vor und weist viele Körner auf. Die meisten Körner bestehen aus einer Legierung beispielsweise: Me1ₓMe2_{Y}Me3_{Z} oder Me1ₓMe2_{Y}Me₃Me4_{w-a} (beide hier als Basismaterial zu verstehen).
Einige Körner Me4 bestehend aus dem Fremdphasenbildner-Legierungselement liegen erfindungsgemäß in elementarer metallischer Form als Zusatzpulver vor.
Ebenso kann der zumindest eine Schmelzpunkterniedriger in Pulverform vorliegen.
Unter Nanopulvern versteht man Pulver im Korngrößenbereich < 500nm, insbesondere <300nm oder <100nm.
Das Zusatzpulver hat vorzugsweise Körngrößen zwischen 300nm und 500nm, zwischen 100nm und 500nm oder vorzugsweise zwischen 100nm und 300nm.

Die Basislegierung des Lots weist also mindestens zwei Legierungselemente auf, wobei eins davon die Matrix bildet. Ein Legierungselement bildet mit dem Schmelzpunkterniedriger, der zu der Legierung zugegeben wird, beim Löten oder während des Einsatzes bei hohen Temperaturen eine Fremdphase, die beispielsweise spröde ist und auf jeden Fall die mechanischen Eigenschaften verschlechtert und wird als Fremdphasenbildnerelement bezeichnet.
Dabei kann sowohl das Element, das die Matrix der Legierung darstellt, als auch das oder die weiteren Legierungsbestandteile mit dem Schmelzpunkterniedriger eine Fremdphase bilden.

Vorzugsweise besteht das Lotbasismaterial aus mindestens zwei, drei oder mehr Legierungselementen und das oder die Fremdphasenbildner-Legierungselemente bilden in der Regel nicht die Matrix.

Das Lot kann als Matrix nickel-, kobalt- oder eisenbasiert sein und dabei zumindest ein Element aus der Gruppe Chrom, Nickel, Kobalt, Aluminium, Wolfram, Tantal, Zirkon, Titan, Mangan, Kohlenstoff oder Eisen aufweisen.

### Ausführungsbeispiel:

Das bekannte Lot nach dem Stand der Technik für eine Eisen-, Nickel- oder Kobaltsuperlegierung weist beispielsweise zumindest die Legierungselemente Wolfram, Chrom, Nickel, Aluminium, Tantal, Basis Nickel oder Kobalt auf und hat hier beispielsweise Bor als einzigen Schmelzpunkterniedriger. Das Bor bildet mit den Fremdphasenbildner-Legierungselementen Wolfram und Chrom Boride. Daher werden zu dem bekannten Lot die Fremdphasenbildner-Legierungselemente Wolfram und/oder Chrom zumindest teilweise in Pulverform hinzu gegeben, wobei hier die Körner vorzugsweise als Nanopulver vorliegen. Vorzugsweise wird nur Chrom als Zusatzpulver verwendet.

Ein Lot nach dem Stand der Technik (StdT) hat beispielsweise folgende Summenformel: Me1ₓMe2_{Y}Me3_{Z}Me4_{w}.
Das erfindungsgemäße Lot lässt sich dann wie folgt beschreiben (Fig. 1): Me1ₓMe2_{Y}Me3_{Z} + wMe4 (Me4= Fremdphasenbilder-Legierungselement).

Das gesamte Lot kann natürlich auch in Pulverform vorliegen, wobei die einzelnen Körner des Basismaterials des Lots eine Legierung bilden und die Fremdphasenbildner-Legierungselemente als Pulver dem Lot, also dem Basispulver des Lots beigemengt sind.

Ebenso kann von einer bekannten Lotzusammensetzung der Anteil an den Fremdphasenbildner-Legierungselementen, die mit dem Schmelzpunkterniedriger nach dem Lötprozess unerwünschte Phasen bilden, reduziert werden (unterstöchiometrisches Lot), wobei dann der Anteil an den Fremdphasenbildner-Elementen durch Zugabe von elementarem Pulver wieder hergestellt wird (Figur 2):
Lot (StdT) : Me1ₓMe2_{Y}Me3_{Z}Me4_{W};
Lot (neu) = Me1ₓMe2_{Y}Me3_{Z}Me4_{w-a} + aMe4.

Eine kobaltbasierte Lotlegierung besteht nach dem Stand der Technik beispielsweise aus 23wt% Chrom, 3,5wt% Tantal, 10wt% Nickel, 7,0wt% Wolfram, 0,5wt% Zirkon, 0,2wt% Titan, 0,1wt% Mangan, 0,4wt% Silizium, 0,6wt% Kohlenstoff, 3,0wt% Bor und 1,5wt% Eisen.
Die Anteile des Zusatzpulvers können bei 1wt%, 2wt%, 3wt% oder 4wt% liegen. Ebenso vorteilhaft sind Bereiche zwischen 1wtl% und 3wt%, 2wt% und 4wt%, 1wt% und 2wt%, 2wt% und 3wt% oder 3wt% und 4wt%.
Zu diesem Pulver wird 1 bis 4wt% des Fremdphasenbildner-Elements, also beispielsweise Chrom und/oder Wolfram hinzu gegeben, da bei diesem Lot Bor als Schmelzpunkterniedriger verwendet wird, das mit den Fremdphasenbildner-Legierungselemente Chrom und Wolfram Boride bildet.

Als Alternative dazu kann der Anteil an Wolfram und Chrom in der oben genannten kobaltbasierten Lotlegierung oder in anderen bekannten Lotlegierungen nach dem Stand der Technik reduziert werden (unterstöchiometrisches Lot), wobei die ursprüngliche Stöchiometrie durch Hinzugabe von elementarem Wolfram und/oder Kobalt in Pulverform wieder hergestellt wird.

Das Lot kann in Form einer Paste, eines Streifens oder einer anderen Form aufgebracht werden.

Weitere Beispiele für ein Lot (Gesamtzusammensetzung) sind:
20wt% Chrom, 20wt% Kobalt, 3wt% Bor, 3wt% Tantal, Rest Nickel oder
13,5wt% Chrom, 9,5wt% Kobalt, 2,5wt% Bor, 3wt% Tantal, 4wt% Aluminium, Rest Nickel
oder
14wt% Chrom, 10wt% Kobalt, 2,7wt% Bor, 2,5wt% Tantal, 3,5wt% Aluminium, Rest Nickel
oder
21wt% Nickel, 22wt% Chrom, 2wt% Bor, 3,5wt% Tantal, Rest Kobalt
oder
15wt% Chrom, 3,5wt% Bor, Rest Nickel
oder
9wt% Chrom, 8wt% Kobalt, 3wt% Bor, 2wt% Aluminium, Rest Nickel.

Durch das erfindungsgemäße Lot werden die Ausscheidungen gleichmäßiger und feiner verteilt, insbesondere bei Verwendung von feinkörnigen Pulvern oder von Nanopulvern, so dass der negative Einfluss von Ausscheidungen sich weniger bemerkbar macht. Insbesondere bei der Verwendung von Nanopulvern treten mehr, aber viele kleine Ausscheidungen (= Defekt) auf. Da die Rissbildungsneigung mit der Defektgröße ansteigt, sinkt hier die Rissbildungsneigung.
Außerdem sinkt lokal die Konzentration des Schmelzpunkterniedrigers, der dann ggfs. Keine Ausscheidungen mehr bildet, sondern sich im Gitter der Matrix löst und so nur eine kleine Gitterstörung darstellt.

Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 mit dem erfindungsgemäßen Lot repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine 100 (Fig. 6)

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 mit dem erfindungsgemäßen Lot repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Filmkühllöcher (nicht dargestellt) auf.

Die Figur 6 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₄-ZrO₂, d.h. sie ist nicht, teilweise oder vollständig stabilisiert durch Yttriumoxid und/oder Kalziumoxid und/oder Magnesiumoxid. Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Lot zur Reparatur eines Bauteils,
insbesondere für eine nickel-, kobalt- und/oder eisenbasierte Superlegierung,
wobei das Lot als Basis eine Legierung aus zwei oder mehreren Legierungselementen
und zumindest einen Schmelzpunkterniedriger aufweist, der mit zumindest einem Fremdphasenbildner-Legierungselement des Lots beim Löten oder während des Einsatzes des Bauteils eine Fremdphase bildet,
**dadurch gekennzeichnet, dass**
zumindest ein Fremdphasenbildner-Legierungselement
in dem Lot zumindest teilweise als elementares metallisches Zusatzpulver vorliegt.

2. Lot nach Anspruch 1,
**dadurch gekennzeichnet, dass**
das Lot nickelbasiert ist.

3. Lot nach Anspruch 1,
**dadurch gekennzeichnet, dass**
das Lot kobaltbasiert ist.

4. Lot nach Anspruch 1, 2 oder 3
**dadurch gekennzeichnet, dass**
das Lot zumindest Chrom als Legierungselement enthält.

5. Lot nach Anspruch 1, 2, 3 oder 4,
**dadurch gekennzeichnet, dass**
das Lot zumindest Aluminium als Legierungselement enthält.

6. Lot nach Anspruch 1, 2, 3, 4 oder 5,
**dadurch gekennzeichnet, dass**
das Lot zumindest Tantal als Legierungselement enthält.

7. Lot nach Anspruch 1, 2, 3, 4, 5 oder 6,
**dadurch gekennzeichnet, dass**
das Lot zumindest Wolfram als Legierungselement enthält.

8. Lot nach einem oder mehreren der Ansprüche 1 bis 7,
**dadurch gekennzeichnet, dass**
das Lot einen einzigen Schmelzpunkterniedriger aufweist.

9. Lot nach einem oder mehreren der Ansprüche 1 bis 8,
**dadurch gekennzeichnet, dass**
das Lot zwei Schmelzpunkterniedriger aufweist.

10. Lot nach Anspruch 1, 8 oder 9,
**dadurch gekennzeichnet, dass**
der zumindest eine Schmelzpunkterniedriger Bor ist.

11. Lot nach Anspruch 1, 8, 9 oder 10,
**dadurch gekennzeichnet, dass**
der zumindest eine Schmelzpunkterniedriger Silizium ist.

12. Lot nach Anspruch 1, 4 oder 7,
**dadurch gekennzeichnet, dass**
das Fremdphasenbildner-Legierungselement Wolfram und/oder Chrom ist.

13. Lot nach Anspruch 1, 4 oder 12,
**dadurch gekennzeichnet, dass**
das Fremdphasenbildner-Legierungselement Chrom ist.

14. Lot nach Anspruch 1, 12 oder 13,
**dadurch gekennzeichnet, dass**
1 bis 4wt% des zumindest einen Fremdphasenbildner-Legierungselements,
insbesondere Wolfram und/oder Chrom in Pulverform vorliegen.

15. Lot nach Anspruch 1,
**dadurch gekennzeichnet, dass**
das Zusatzpulver ganz oder teilweise als Nanopulver vorliegt und
insbesondere Korngrößen < 500nm, < 300nm oder < 100nm aufweist.

16. Lot nach einem oder mehreren der Ansprüche 1 bis 15, **dadurch gekennzeichnet, dass**
einem bekannten Lot nach dem Stand der Technik zusätzlich zumindest ein Fremdphasenbildner-Legierungselement in Pulverform hinzugefügt ist.

17. Lot nach einem oder mehreren der Ansprüche 1 bis 16, **dadurch gekennzeichnet, dass**
ein bekanntes Lot nach dem Stand der Technik in seiner Stöchiometrie so verändert ist,
dass durch die Zugabe des zumindest einen Fremdphasenbildner-Legierungselements in Pulverform die Stöchiometrie nach dem Stand der Technik wieder hergestellt ist.

18. Lot nach Anspruch 1, 16 oder 17,
**dadurch gekennzeichnet,**
**dass** das legierte Basismaterial des Lots ebenfalls in Pulverform vorliegt.

19. Lot nach einem oder mehreren der vorherigen Ansprüche, **dadurch gekennzeichnet, dass**
das Lot aus
23wt% Chrom,
3,5wt% Tantal,
10wt% Nickel,
7,0wt% Wolfram,
0,5wt% Zirkon,
0,2wt% Titan,
0,1wt% Mangan,
0,4wt% Silizium,
0,6wt% Kohlenstoff,
3,0wt% Bor,
1,5wt% Eisen,
Rest Kobalt besteht.

20. Lot nach einem oder mehreren der vorherigen Ansprüche, **dadurch gekennzeichnet, dass**
das Lot aus 20wt% Chrom, 20wt% Kobalt, 3wt% Bor, 3wt% Tantal, Rest Nickel besteht.

21. Lot nach einem oder mehreren der vorherigen Ansprüche, **dadurch gekennzeichnet, dass**
das Lot aus 14wt% Chrom, 10wt% Kobalt, 2,7wt% Bor, 2,5wt% Tantal, 3,5wt% Aluminium, Rest Nickel besteht.

22. Lot nach einem oder mehreren der vorherigen Ansprüche, **dadurch gekennzeichnet, dass**
das Lot aus 21wt% Nickel, 22wt% Chrom, 2wt% Bor, 3,5wt% Tantal, Rest Kobalt besteht.

23. Lot nach Anspruch 1, 8, 9, 10, 11, 19, 20, 21 oder 22, **dadurch gekennzeichnet,**
**dass** der Schmelzpunkterniedriger in Pulverform vorliegt.
